# EUROPÄISCHE PATENTANMELDUNG

(11) **EP 4 265 401 A1**
(43) Veröffentlichungstag der Anmeldung: **25.10.2023**
(21) Anmeldenummer: 23167683.4
(22) Anmeldetag: 13.04.2023
(51) Int. Cl.: B29C 65/72, B29C 65/02, B29C 65/48, B65B 7/14, B65B 51/02, B65D 35/02, B65D 35/10, B65D 35/12, B65D 35/14, B29C 65/08, B29C 65/10, B29C 65/16, B29L 23/20, B29K 23/00

(54) **TUBE UND VERFAHREN ZUM VERSCHLIESSEN EINER TUBE**

(30) Priorität: 21.04.2022 DE 102022109695
(71) Anmelder: IWK Verpackungstechnik GmbH, 76297 Stutensee (DE)
(72) Erfinder: Kirsten, Matthias, 76344 Eggenstein-Leopoldshafen (DE); Matthäus, Dirk, 76199 Karlsruhe (DE)
(74) Vertreter: Lichti - Patentanwälte Partnerschaft mbB

(57) **Zusammenfassung**

Eine Tube besitzt einen Tubenkörper (11), der an einem 1. axialen Ende eine Tubenschulter aufweist und an einem entgegengesetzten 2. axialen Ende verschlossen ist, indem gegenüberliegende Abschnitte einer Tubenwandung (14) des Tubenkörpers (11) in einem Verschlussbereich (17) miteinander verschweißt sind. Der Verschlussbereich (17) ist an einer ersten Falzkante (21) so umgebogen, dass er in einem mit dem Tubenkörper verbundenen, nicht umgebogenem Basisabschnitt (15) und einem Umbiegungsabschnitt (18) unterteilt ist. Der Umbiegungsabschnitt (18) ist mit dem nicht umgebogenen Basisabschnitt (15) des Verschlussbereichs verklebt (20). Der Tubenkörper (11) ist vorzugsweise aus Papier hergestellt, das zumindest auf der Innenseite des Tubenkörpers mit einer Lage aus Kunststoff beschichtet ist.

## Beschreibung

Die Erfindung betrifft eine Tube mit einem Tubenkörper, der an einem 1. axialen Ende eine Tubenschulter aufweist und an einem entgegengesetzten 2. axialen Ende verschlossen ist, indem gegenüberliegende Abschnitte einer Tubenwandung des Tubenkörpers in einem Verschlussbereich miteinander verschweißt sind.

Darüber hinaus betrifft die Erfindung ein Verfahren zum Verschließen einer Tube, die einen Tubenkörper aufweist, wobei gegenüberliegende Abschnitte einer Tubenwandung des Tubenkörpers in einem Verschlussbereich miteinander verschweißt werden.

Tuben des genannten Aufbaus sind seit langem bekannt. Der Tubenkörper ist von einem zylindrischen Rohr aus Kunststoff gebildet, der an seinem 1. axialen Ende mit einer insbesondere vorgefertigten Tubenschulter versehen ist, die ebenfalls aus Kunststoff besteht. An der Tubenschulter kann eine Verschlussklappe, ein Deckel oder ein sonstiges Verschlusselement angeordnet werden.

An dem der Tubenschulter entgegengesetzten 2. axialen Ende ist die Tube zunächst offen und kann dort mit einem gewünschten Produkt, beispielsweise einer Creme gefüllt werden. Nach dem Einfüllen des Produktes wird der Tubenkörper an seinem 2. axialen Ende durch Heißluft und/oder Ultraschall und/oder Laserstrahlen oder in sonstiger Weise soweit erwärmt, dass das Kunststoff-Material des Tubenkörpers zumindest oberflächlich aufgeschmolzen wird. Der Tubenkörper wird dann an seinem 2. axialen Ende senkrecht zu seiner Längserstreckung zusammengedrückt, wodurch gegenüberliegende Abschnitte der Tubenwandung des Tubenkörpers miteinander in Anlage kommen und aufgrund des aufgeschmolzenen Kunststoff-Materials verschweißt werden.

Es ist versucht worden, die Menge an Kunststoff-Material, die für eine Tube verwendet wird, zu reduzieren, indem der Tubenkörper nicht vollständig aus Kunststoff, sondern aus einem Papier besteht, das zumindest einseitig und insbesondere auf der Innenseite mit einer dünnen Kunststoffschicht beschichtet ist. Zum Verschließen der Tube wird die dünne Kunststoffschicht im Bereich des 2. axialen Endes in genannter Weise erwärmt, woraufhin gegenüberliegende Abschnitte der Tubenwandung des Tubenkörpers zusammengedrückt werden. Es hat sich aber gezeigt, dass die Schweißverbindung des mit Kunststoff beschichteten Papiers des Tubenkörpers aufgehen kann, wenn auf den Tubenkörper durch einen Benutzer von außen eine übermäßige Druckkraft ausgeübt und somit der Innendruck im Innenraum des Tubenkörpers erhöht wird. In Folge des erhöhten Innendrucks kann die Schweißverbindung aufgehen, wodurch das in der Tube befindliche Produkt herausspritzt.

Der Erfindung liegt die Aufgabe zugrunde, eine Tube der genannten Art zu schaffen, die auch dann sicher verschlossen ist, wenn der Tubenkörper nicht oder nur zu einem geringen Anteil aus Kunststoff besteht.

Darüber hinaus soll ein Verfahren zum Verschließen einer entsprechenden Tube geschaffen werden, das sich in einfacher und schneller Weise ausführen lässt.

Hinsichtlich der Tube wird diese Aufgabe durch eine Tube mit den Merkmalen des Anspruchs 1 gelöst. Dabei ist vorgesehen, dass der die Schweißnaht aufweisende Verschlussbereich an einer 1. Falzkante so umgebogen ist, dass der Verschlussbereich in einem mit dem Tubenkörper verbundenen, nicht umgebogenen Basisabschnitt und einen Umbiegungsabschnitt unterteilt ist, und dass der Umbiegungsabschnitt nur mit dem nicht umgebogenen Basisabschnitt des Verschlussbereichs verklebt ist.

Erfindungsgemäß wird von der Grundüberlegung ausgegangen, die Tube einerseits an ihrem 2. axialen Ende in dem Verschlussbereich zu verschweißen und andererseits zusätzlich dazu den Verschlussbereich umzubiegen und den dadurch gebildeten Umbiegungsabschnitt zusätzlich mit dem Verschlussbereich zu verkleben. Es hat sich gezeigt, dass dieser doppelte Verschluss der Tube auch dann ausreicht, wenn als Material für den Tubenkörper ein Mehr-Schicht-Material verwendet wird, von dem nicht alle Schichten schweißbar sind. Dabei ist vorgesehen, dass der Umbiegungsabschnitt nur mit dem nicht umgebogenen Basisabschnitt des Verschlussbereichs und nicht mit der Außenwandung des Tubenkörpers außerhalb des Verschlussbereichs verbunden ist.

In einer bevorzugten Ausgestaltung der Erfindung ist vorgesehen, dass der Tubenkörper bzw. dessen Tubenwandung eine
1. Lage aus Papier aufweist, die zumindest einseitig und insbesondere auf der Innenseite des Tubenkörpers mit einer
2. Lage aus Kunststoff beschichtet ist. Zusätzlich dazu kann auch vorgesehen sein, dass die 1. Lage aus Papier auch außenseitig mit einer 3. Lage aus Kunststoff beschichtet ist, wobei vorzugsweise Polyethylen als Kunststoff Verwendung findet.

Der erfindungsgemäße doppelte Verschluss der Tube ermöglicht es, die Stärke der inneren 2. Lage aus Kunststoff sehr gering zu halten. Vorzugsweise ist vorgesehen, dass die Dicke der 2. Lage im Bereich von 3 µm bis 8 um und insbesondere im Bereich von 4 µm bis 6 um liegt.

Nachdem der Verschlussbereich durch Verschweißen ausgebildet ist, wird der Verschlussbereich an der 1. Falzkante um vorzugsweise 180° umgebogen, so dass der umgebogene Umbiegungsabschnitt des Verschlussbereichs neben dem nicht umgebogenen Basisabschnitt des Verschlussbereichs liegt. Anschließend wird der Umbiegungsabschnitt mit dem nicht umgebogenen Basisabschnitt des Verschlussbereichs verklebt, wobei als Klebstoff vorzugsweise ein Heißkleber verwendet werden kann. Somit ist der Umbiegungsabschnitt nur mit dem nicht umgebogenen Basisabschnitt des Verschlussbereichs und nicht mit der Außenwandung des Tubenkörpers außerhalb des Verschlussbereichs verbunden.

In Weiterbildung der Erfindung kann vorgesehen sein, dass zusätzlich auch der Umbiegungsabschnitt an einer 2. Falzkante so umgebogen ist, dass der Umbiegungsabschnitt in einen mit der 1. Falzkante verbundenen Umbiegungs-Basisabschnitt und einen Umbiegungs-Endabschnitt unterteilt ist. Der Umbiegungs-Endabschnitt und/oder der Umbiegungs-Basisabschnitt kann mit dem nicht umgebogenen Basisabschnitt des Verschlussbereichs verklebt sein.

In Weiterbildung der Erfindung kann vorgesehen sein, dass der Umbiegungs-Endabschnitt des Umbiegungsabschnittes zwischen dem Umbiegungs-Basisabschnitt und dem Basisabschnitt des Verschlussbereichs angeordnet ist. Bei dieser Ausgestaltung liegen drei Bereiche des Tubenkörpers aufeinander, nämlich der Basisabschnitt des verschweißten Verschlussbereichs, der Umbiegungs-Endabschnitt des Umbiegungsabschnitts und der Umbiegungs-Basisabschnitt des Umbiegungsabschnitts.

Der Umbiegungs-Endabschnitt verläuft vorzugsweise parallel zum Umbiegungs-Basisabschnitt, d.h. der Umbiegungsabschnitt wird in dem Bereich der 2. Falzkante um 180° umgebogen.

Vorzugsweise ist der Umbiegungs-Endabschnitt des Umbiegungsabschnitts zwischen dem Umbiegungs-Basisabschnitt und dem Basisabschnitt des Verschlussbereichs angeordnet.

In vielen Fällen ist es ausreichend, den Umbiegungs-Endabschnitt mit dem nicht umgebogenen Basisabschnitt des Verschlussbereichs zu verkleben. In Weiterbildung der Erfindung kann vorgesehen sein, dass der Umbiegungs-Endabschnitt zusätzlich mit dem Umbiegungs-Basisabschnitt verklebt ist.

Hinsichtlich des Verfahrens zum Verschließen einer Tube wird die oben genannte Aufgabe dadurch gelöst, dass der Verschlussbereich des Tubenkörpers nach dem Verschweißen an einer 1. Falzkante so umgebogen wird, dass der Verschlussbereich in einem mit dem Tubenkörper verbundenen, nicht umgebogenen Basisabschnitt und einem Umbiegungsabschnitt unterteilt wird, und dass der Umbiegungsabschnitt mit dem nicht umgebogenen Basisabschnitt des Verschlussbereichs verklebt wird.

Vorzugsweise wird ein sogenannter Tuben-Rohling üblichen Aufbaus verwendet. Der Tuben-Rohling besitzt einen zylindrischen, rohrförmigen Tubenkörper, der an seinem 1. axialen Ende mit einer Tubenschulter ausgestattet ist, auf die ein Verschlusselement aufsetzbar ist. Der Tubenkörper steht vorzugsweise aus einer Papierlage, die zumindest innenseitig mit einer Kunststoff-Lage beschichtet ist. Nach dem Befüllen der Tube wird die Tube an ihrem der Tubenschulter abgewandten 2. axialen Ende in üblicher Weise durch Aufbringen von Wärmeenergie, Aufweichen des Kunststoffes und Zusammendrücken gegenüberliegender Abschnitte der Tubenwandung des Tubenkörpers in einem Verschlussbereich verschweißt.

Nach dem Ende des Schweißvorgangs wird der Verschlussbereich an einer 1. Falzkante vorzugsweise um 180° so umgebogen, dass der Verschlussbereich in einem mit dem Tubenkörper verbundenen, nicht umgebogenen Basisabschnitt und einen Umbiegungsabschnitt unterteilt wird. Nach oder mit dem Umbiegen des Umbiegungsabschnittes wird der Umbiegungsabschnitt mit dem nicht umgebogenen Basisabschnitt des Verschlussbereichs vorzugsweise mit einem Heißkleber verklebt. Dabei ist vorgesehen, dass der Umbiegungsabschnitt nur mit dem nicht umgebogenen Basisabschnitt des Verschlussbereichs und nicht mit der Außenwandung des Tubenkörpers außerhalb des Verschlussbereichs verbunden ist. Nach Aushärten der Klebverbindung ist die Tube doppelt verschlossen, nämlich einerseits durch die Verschweißung der Tubenwandung in dem Verschlussbereich und andererseits durch die Verklebung des Umbiegungsabschnittes.

Zur Verstärkung des Verschlusses kann in Weiterbildung der Erfindung vorgesehen sein, dass der Umbiegungsabschnitt zusätzlich an einer 2. Falzkante so umgebogen wird, dass der Umbiegungsabschnitt in einen mit der 1. Falzkante verbundenen Umbiegungs-Basisabschnitt und einen Umbiegungs-Endabschnitt unterteilt wird. Mit oder nach der Ausbildung der 2. Falzkante wird der Umbiegungs-Endabschnitt mit dem nicht umgebogenen Basisabschnitt des Verschlussbereichs insbesondere mittels eines Heißklebers verklebt.

Das Umbiegen des Umbiegungsabschnitts an der 2. Falzkante kann so ausgeführt werden, dass der umgebogene Umbiegungs-Endabschnitt des Umbiegungsabschnittes zwischen dem Umbiegungs-Basisabschnitt und dem Basisabschnitt des Verschlussbereichs angeordnet wird.

Zusätzlich oder alternativ kann vorgesehen sein, dass der Umbiegungs-Endabschnitt mit dem Umbiegungs-Basisabschnitt vorzugsweise mittels eines Heißklebers verklebt wird.

Weitere Einzelheiten und Merkmale der Erfindung sind aus der folgenden Beschreibung von Ausführungsbeispielen unter Bezugnahme auf die Zeichnungen ersichtlich. Es zeigen:
- Fig. 1: eine schematische Ansicht der Bestandteile einer Tube in auseinandergezogener Darstellung,
- Fig. 2: eine schematische, unmaßstäbliche Darstellung des Schnitts II-II in einer ersten Phase des Verfahrens,
- Fig. 3: eine Fig. 2 entsprechende Darstellung in einer zweiten Phase des Verfahrens,
- Fig. 4: eine Fig. 3 entsprechende Darstellung mit einer alternativen Ausgestaltung der Tube bzw. des Verfahrens und
- Fig. 5: eine Weiterbildung der Tube bzw. des Verfahrens gemäß Fig. 4.

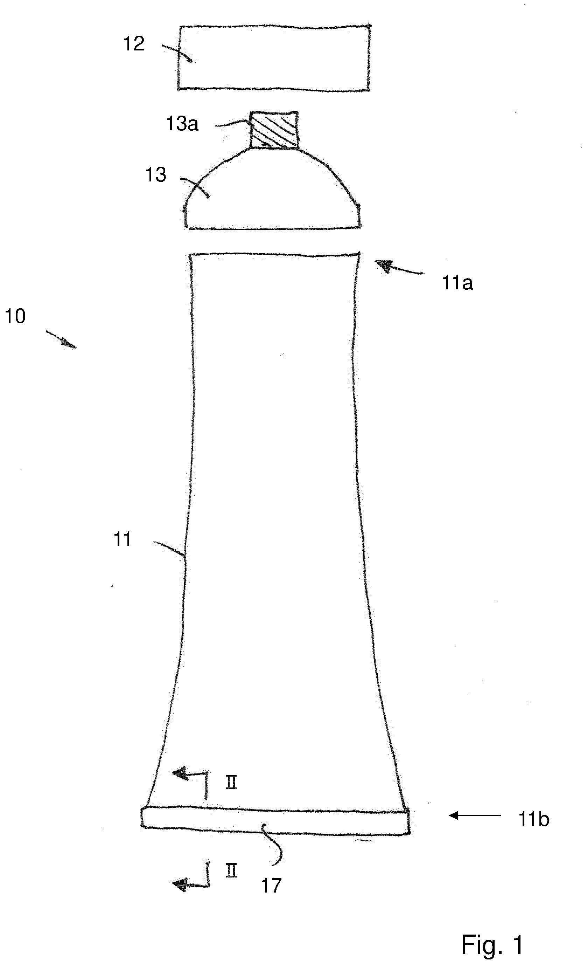

Fig. 1 zeigt in auseinandergezogener Darstellung die Einzelteile einer Tube 10. Die Tube 10 besitzt einen rohrförmigen Tubenkörper 11, der an einem gemäß Fig. 1 rechten 1.

Ende 11a mit einer Tubenschulter 13 versehen wird. Die Tubenschulter 13 kann aus Kunststoff vorgefertigt sein und mit dem Tubenkörper 11 verbunden werden. Beim dargestellten Ausführungsbeispiel besitzt die Tubenschulter 13 ein Gewinde 13a, auf das eine Verschlusskappe 12 aufgeschraubt werden kann.

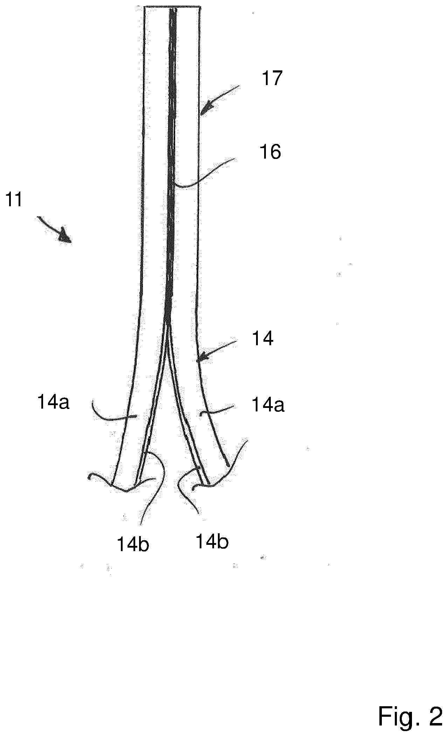

An dem entgegengesetzten, gemäß Fig. 1 linken 2. axialen Ende 11b ist der Tubenkörper 11 in einem Verschlussbereich 17 verschlossen. Einzelheiten des Verschlussbereichs 17 sind aus Fig. 2 ersichtlich.

Gemäß Fig. 2 ist eine Tubenwandung 14 des Tubenkörpers 11 mehrlagig aufgebaut und besitzt eine 1. Lage 14a aus Papier, auf die innenseitig eine 2. Lage 14b aus Kunststoff aufgebracht ist. Der Kunststoff der 2. Lage 14b wird im Bereich des 2. axialen Endes 11b durch Heißluft oder Ultraschall oder Laser oder in sonstiger Weise soweit erwärmt, dass der Kunststoff der 2. Lage 14b zumindest oberflächlich schmilzt. Gegenüberliegende Abschnitte der aufgeschmolzenen Tubenwandung 14 des Tubenkörpers 11 werden dann so gegeneinandergedrückt, dass die aufgeschmolzenen Abschnitte der 2. Lage 14b unter Bildung einer Schweißnaht 16 miteinander verschweißt werden. Dieser Zustand ist in Fig. 2 dargestellt.

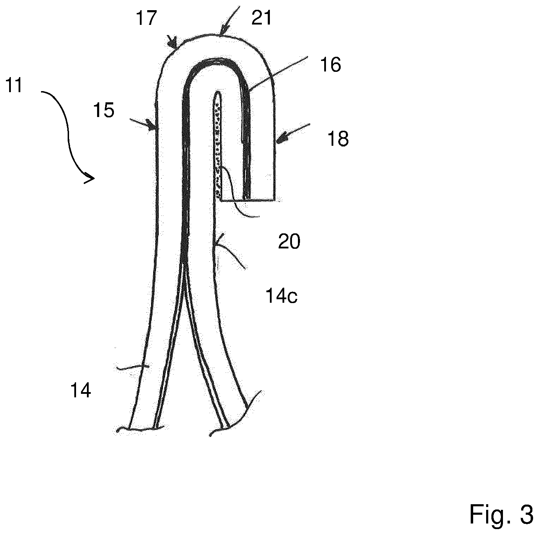

Der die Schweißnaht 16 aufweisende Verschlussbereich 17 wird dann an einer 1. Falzkante 21 (s. Fig. 3) um 180° so umgebogen, dass der Verschlussbereich 17 in einen mit dem Tubenkörper 11 verbundenen, nicht umgebogenen Basisabschnitt 15 und einen Umbiegungsabschnitt 18 unterteilt ist, wobei der Basisabschnitt 15 länger als der Umbiegungsabschnitt 18 ist. Der Umbiegungsabschnitt 18 liegt dann neben und im Wesentlichen parallel zu dem Basisabschnitt 15 auf dessen Außenseite. Mit oder nach der Ausbildung der 1. Falzkante 21 wird ein Klebstoff 20 so aufgebracht, dass der Umbiegungsabschnitt 18 mit einer Außenwandung 14c des nicht umgebogenen Basisabschnitt 15 des Verschlussbereichs 17 verklebt ist. Dabei ist vorgesehen, dass der Umbiegungsabschnitt 18 nur mit dem nicht umgebogenen Basisabschnitt 15 des Verschlussbereichs 17 und nicht mit der Außenwandung 14c des Tubenkörpers 11 außerhalb des Verschlussbereichs 17 verbunden ist. Dieser Zustand ist in Fig. 3 dargestellt.

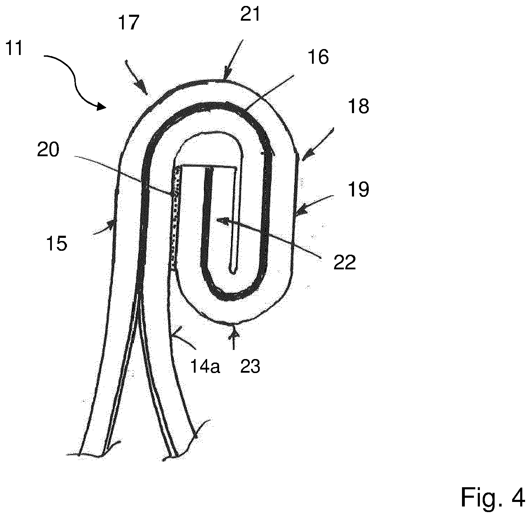

Fig. 4 zeigt eine alternative Ausgestaltung des Verschlusses der Tube 11, wobei auch hier der Verschlussbereich 17 an der 1. Falzkante 21 so umgebogen wird, dass der Verschlussbereich 17 in den mit dem Tubenkörper 11 verbundenen, nicht umgebogenen Basisabschnitt 15 und den Umbiegungsabschnitt 18 unterteilt ist. Anschließend wird jedoch der Umbiegungsabschnitt 18 an einer 2. Falzkante 23 nochmals um 180° so umgebogen, dass der Umbiegungsabschnitt 18 in einem mit der 1. Falzkante 21 verbundenen Umbiegungs-Basisabschnitt 19 und einen Umbiegungs-Endabschnitt 22 unterteilt ist. Der Umbiegungs-Endabschnitt 22 des Umbiegungsabschnitts 18 ist dabei zwischen dem Umbiegungs-Basisabschnitt 19 und dem Basisabschnitt 15 des Verschlussbereichs 17 angeordnet.

Mit oder nach der Ausbildung der 2. Falzkante 23 wird der Umbiegungs-Endabschnitt 22 mit dem nicht umgebogenen Basisabschnitt 15 des Verschlussbereichs 17 mittels Klebstoff 20 verklebt.

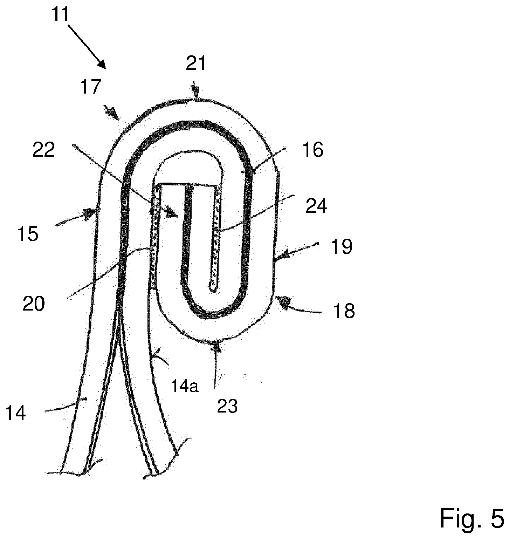

Fig. 5 zeigt eine Weiterbildung der Ausgestaltung gemäß Fig. 4 und unterscheidet sich von dieser dadurch, dass nun zusätzlich auch der Umbiegungs-Endabschnitt 22 mittels einer Klebstoffschicht 24 mit dem Umbiegungs-Basisabschnitt 19 verklebt ist.

## Patentansprüche

1. Tube (10) mit einem Tubenkörper (11), der an einem 1. axialen Ende (11a) eine Tubenschulter (13) aufweist und an einem entgegengesetzten 2. axialen Ende (11b) verschlossen ist, indem gegenüberliegende Abschnitte einer Tubenwandung (14) des Tubenkörpers (11) in einem Verschlussbereich (17) miteinander verschweißt sind, **dadurch gekennzeichnet, dass** der Verschlussbereich (17) an einer 1. Falzkante (21) so umgebogen ist, dass der Verschlussbereich (17) in einen mit dem Tubenkörper (11) verbundenen, nicht umgebogenen Basisabschnitt (15) und einen Umbiegungsabschnitt (18) unterteilt ist, und dass der Umbiegungsabschnitt (18) nur mit dem nicht umgebogenen Basisabschnitt (15) des Verschlussbereichs (17) verklebt ist.

2. Tube nach Anspruch 1, **dadurch gekennzeichnet, dass** die Tubenwandung (14) eine 1. Lage (14a) aus Papier aufweist, die zumindest einseitig mit einer 2. Lage (14b) aus Kunststoff beschichtet ist.

3. Tube nach Anspruch 1 oder 2, **dadurch gekennzeichnet,**
**dass** der Umbiegungsabschnitt (18) an einer 2. Falzkante (23) so umgebogen ist, dass der Umbiegungsabschnitt (18) in einen mit der 1. Falzkante (21) verbundenen Umbiegungs-Basisabschnitt (19) und einen Umbiegungs-Endabschnitt (22) unterteilt ist, und dass der Umbiegungs-Endabschnitt (22) mit dem nicht umgebogenen Basisabschnitt (15) des Verschlussbereichs (17) verklebt ist.

4. Tube nach Anspruch 3, **dadurch gekennzeichnet, dass** der Umbiegungs-Endabschnitt (22) des Umbiegungsabschnitts (18) zwischen dem Umbiegungs-Basisabschnitt (19) und dem Basisabschnitt (15) des Verschlussbereichs (17) angeordnet ist.

5. Tube nach Anspruch 4, **dadurch gekennzeichnet, dass** der Umbiegungs-Endabschnitt (22) mit dem Umbiegungs-Basisabschnitt (19) verklebt ist.

6. Verfahren zum Verschließen einer Tube (10), die einen Tubenkörper (11) aufweist, wobei gegenüberliegende Abschnitte einer Tubenwandung (14) des Tubenkörpers (11) in einem Verschlussbereich (17) miteinander verschweißt werden, **dadurch gekennzeichnet, dass** der Verschlussbereich (17) nach dem Verschweißen an einer 1. Falzkante (21) so umgebogen wird, dass der Verschlussbereich (17) in einen mit dem Tubenkörper (11) verbundenen, nicht umgebogenen Basisabschnitt (15) und einen Umbiegungsabschnitt (18) unterteilt wird, und dass der Umbiegungsabschnitt (18) mit dem nicht umgebogenen Basisabschnitt (15) des Verschlussbereichs (17) verklebt wird.

7. Verfahren nach Anspruch 6, **dadurch gekennzeichnet,**
**dass** der Umbiegungsabschnitt (18) an einer 2. Falzkante (23) so umgebogen wird, dass der Umbiegungsabschnitt (18) in einen mit der 1. Falzkante (21) verbundenen Umbiegungs-Basisabschnitt (19) und einen Umbiegungs-Endabschnitt (22) unterteilt wird, und dass der Umbiegungs-Endabschnitt (22) mit dem nicht umgebogenen Basisabschnitt (15) des Verschlussbereichs (17) verklebt wird.

8. Verfahren nach Anspruch 7, **dadurch gekennzeichnet, dass** der umgebogene Umbiegungs-Endabschnitt (22) des Umbiegungsabschnitts (18) zwischen dem Umbiegungs-Basisabschnitt (19) und dem Basisabschnitt (15) des Verschlussbereichs (17) angeordnet wird.

9. Verfahren nach Anspruch 8, **dadurch gekennzeichnet, dass** der Umbiegungs-Endabschnitt (22) mit dem Umbiegungs-Basisabschnitt (19) verklebt wird.
